# EUROPÄISCHE PATENTSCHRIFT

(11) **EP 0 747 275 B1**
(45) Veröffentlichungstag und Bekanntmachung des Hinweises auf die Patenterteilung: **31.10.2001**
(21) Anmeldenummer: 96109169.1
(22) Anmeldetag: 07.06.1996
(51) Int. Cl.: B60T 8/00

(54) **Elektrisch regelbares Bremssystem**
Electrically controllable brake system
Système de freinage électrique réglable

(30) Priorität: 10.06.1995 DE 19521175
(43) Veröffentlichungstag der Anmeldung: 11.12.1996
(73) Patentinhaber: Continental Aktiengesellschaft, 30165 Hannover (DE)
(72) Erfinder: Dieckmann, Thomas, Dr.-Ing., 30982 Pattensen (DE); Prinzler, Hubertus, 30853 Langenhagen (DE); Maron, Christof, 30989 Gehrden (DE)

(56) Entgegenhaltungen:
- EP-A- 0 467 112
- DE-A- 4 339 570

## Beschreibung

Die Erfindung betrifft ein elektrisch/elektronisch regelbares Bremssystem, insbesondere vom Brake-by-wire-Typ, mit mindestens zwei Bremskreisen, wie es z. B. durch die DE 43 39 570 A1 bekannt ist.

Bei derartigen Bremssystemen soll die Zuordnung der Funktionsinhalte elektronischer Steuereinheiten für die beiden Bremskreise - unter besonderer Berücksichtigung der Zuverlässigkeit - optimiert werden.

Erfindungsgemäß wird diese Aufgabe bei einem Bremssystem der genannten Art durch die Merkmale des Patentanspruchs 1 gelöst.

Durch die unterschiedlichen Funktionsinhalte und damit verbundenen unterschiedlichen Integrationsgrade der dabei verwendeten einzelnen Prozessoren kommt man im Gesamtsystem mit einer minimalen Anzahl von Prozessoren aus.

Dadurch, daß die Prozessoren des Hinterachskreises zusätzliche Funktionen der Gesamtfahrzeugregelung, wie (ABS)-Referenzgeschwindigkeitsbildung, Fahrdynamikregelung usw., übernehmen, ist der Integrationsgrad der Prozessoren an der Vorderachse geringer als an der Hinterachse. Damit ist die Systemzuverlässigkeit an der Vorderachse entsprechend höher als an der Hinterachse.

Alle Funktionen werden redundant behandelt. Alle Prozessoren erhalten die dreifach redundanten Bremspedalsignale. Jeder Prozessor ist in der Lage, bei Ausfall der sogenannten "höheren" Funktionen, die die Gesamtfahrzeugregelung betreffen, eine Grundbremsfunktion auf der Basis der reinen Bremspedalsignale zu verwirklichen.

Bei der Ausstattung der den Hinterrädern zugeordneten radindividuellen elektronischen Steuerungs/Regelungseinheiten mit "höheren Funktionen" und der Verknüpfung dieser beiden Einheiten miteinander geht die Erfindung von der Tatsache aus, daß in einem elektrischen Bremssystem üblicherweise eine Einheit für sogenannte übergeordnete oder "höhere" Funktionen vorgesehen ist. Hierunter sind Funktionen zu verstehen, die sich auf das gesamte Fahrzeug beziehen, d. h. nicht radbezogene sondern fahrzeugbezogene Funktionen. Bisher wurden diese "höheren Funktionen" zentral verarbeitet. Würde man diese fahrzeugbezogenen Funktionen auch jeweils in alle radindividuellen Bremssteuerungs-/Regelungseinheiten integrieren wollen, so wären die hierfür erforderlichen einerseits aufwendigen und teuren und andererseits komplexen und statistisch störanfälligeren Prozessoren sogar viermal erforderlich, ohne gleichzeitig die Betriebssicherheit zu erhöhen.

Erfindungsgemäß werden nunmehr auch diese "höheren Funktionen", die das Gesamtsystem des Fahrzeugs betrachten, wie z. B. die elektronische Bremskraftverteilung und die Bildung der Referenzgeschwindigkeit des Fahrzeugs, in die radindividuellen elektronischen Steuerungs/Regelungseinheiten mit integriert. Aber nicht an allen vier Rädern sondern nur an zwei Rädern, und zwar an den Hinterrädern. Der Vorschlag, wonach lediglich die hinteren Räder mit Einheiten für die "höheren Funktionen" auszustatten sind, geht von folgender Überlegung aus: Diese "höheren Funktionen" sind bedeutend und entscheidend für die Fahrsicherheit, denn damit können die einzelnen Räder ohne Pedalbetätigung abgebremst werden und damit wird der Bremsablauf des Fahrzeugs koordiniert. Bei den "höheren Funktionen" handelt es sich um aufwendige Funktionen.

Aus Sicherheitsgründen darf man diese "höheren Funktionen" nicht nicht-redundant ablaufen lassen. Deshalb müssen sich diese "höheren Funktionen" gegenseitig kontrollieren, und werden daher zweifach benötigt.
Entsprechend stehen die hochintegrierten Prozessoren an der Hinterachse miteinander in Wirkverbindung. Hierdurch ist die Möglichkeit gegeben, daß sich die beiden Prozessoren bezüglich der zusätzlichen Funktionen für die Gesamtfahrzeugregelung gegenseitig kontrollieren und sich im Fehlerfall abschalten.

An der für die Fahrsicherheit besonders relevanten Hinterachse ist somit ein Radblockieren durch Prozessorfehlfunktionen ausgeschlossen, während an der Vorderachse, die den überwiegenden Teil der Bremskraft aufbringt, eine sehr niedrige Ausfallrate gewährleistet ist.

Wenn man an beiden Achsen eine derartige gegenseitige <Links-Rechts-) Kontrolle einführen-würde, ergäbe sich eine beträchtliche Verringerung der Ausfallsicherheit. Denn immer wenn in einer Einheit eines Hinterrades ein Fehler auftritt, schaltet sich der gesamte Block der Hinterachse (beide radindividuellen Steuerungs-/Regelungseinheiten) ab.

Es kann zwar erkannt werden, ob ein Fehler aufgetreten ist; weil es sich aber nicht um eine Dreiprozessorstruktur handelt, kann nicht erkannt werden, an welchem Hinterrad ein solcher Fehler entstanden ist. Als Folge davon schaltet sich das ganze System ab, was bedeutet, daß die Bremsaktoren an der Hinterachse ausfallen. Es findet also eine Kontrolle mit Abschaltfunktion statt.

Fände eine gegenseitige Kontrolle auch an der Vorderachse des Fahrzeugs statt, dann wäre das System nicht mehr in der Lage, die Anforderungen an die Gesamtzuverlässigkeit zu erfüllen.

Da der Abschaltbefehl auch die Grundfunktionen mit umfaßt, ist erfindungsgemäß eine Durchführung der Links-Rechts-Kontrolle auf die Hinterachse beschränkt, denn an der Hinterachse werden lediglich ca 30% der Bremskraft aufgebracht. Tritt demnach in den "höheren Funktionen" ein Fehler auf, so ist der verbleibende Anteil an Grundfunktion zum Bremsen 70% der an der Vorderachse vorhandenen Bremskraft.

Da die "höheren Funktionen" in die radindividuellen elektronischen Steuerungs-/Regelungseinheiten mit integriert werden, können separate Prozessoren für diese "höheren Funktionen" eingespart werden.

An der Vorderachse gibt es also keine gegenseitige Kontrolle. Deshalb werden im Fehlerfall nicht die beiden Bremsaktoren der Vorderachse abgeschaltet und deshalb geht im Fehlerfall die Bremswirkung an der wichtigen Vorderachse nicht vollständig verloren.

Im schlimmsten Fall (worst case) wäre es denkbar, daß ein Vorderrad entweder ganz ausfällt oder völlig blockiert ("zufährt"). Ein solches Radblockieren ist an der Vorderachse bedeutend unkritischer als an der Hinterachse. An der Hinterachse kann ein Radblockieren zum Schleudern führen. Durch den Verzicht auf eine wechselweise Kontrolle an der Vorderachse wird eine größere Systemzuverlässigkeit in der Ausfallrate erreicht. Wegen der fehlenden gegenseitigen Kontrolle kann ein einzelner Fehler zwar schwerwiegender sein, aber die Wahrscheinlichkeit, daß beide Bremsen an der Vorderachse gleichzeitig ausfallen, ist sehr gering. Im schlimmsten Fall bremst eine Vorderradbremse nicht mehr mit.

Die Informationen der Bremsbetätigungseinrichtung werden zu jeder Steuerungs-/Regelungseinheit einzeln geführt. Über einen CAN-BUS, der die radindividuellen Steuerungs/Regelungseinheiten miteinander verbindet, werden die Informationen, die aus den "höheren Funktionen" abgeleitet werden, nach vorne übermittelt, d. h. wenn die "höheren Funktionen" eine spezifische Bremskraftaufteilung wünschen, wird diese über den CAN-BUS nach vorne übermittelt. Wird dieser CAN-BUS durchtrennt, so können alle Prozessoren in den Grundfunktionen weiterarbeiten, denn alle haben die direkte Bremspedalinformation.

Bei der Zuordnung von Prozessoren und deren Funktionen in Diagonalbremskreisen ist eine spezielle Fehlerlogik, sowie eine entsprechende Kopplung der Prozessoren der Radbremsen der Hinterachse über die Grenzen des einzelnen Bremskreises hinweg notwendig und vorgesehen.

Insgesamt ist mit dem erfindungsgemäßen Bremssystem eine Minimierung des Elektronikaufwands und der damit verbundenen Kosten bei hoher Systemzuverlässigkeit gegeben.

Das Bremssystem ist bei allen radgestützten Transportmitteln anwendbar.

Die Erfindung soll anhand des folgenden Schemas erläutert werden.

Das Blockdiagramm zeigt ein elektrisch/elektronisch regelbares Zweikreis-Bremssystem mit den beiden Bremskreisen 2,4 und einer Bremsbetätigungseinrichtung 6, bei dem die Hinterradbremsen und die Vorderradbremsen jeweils zu einem Bremskreis 2,4 zusammengefaßt sind, und wobei wiederum die beiden jeweiligen, zur Steuerung/Regelung vorgesehenen Prozessoren 8a,b; 10a, b jeweils ein gemeinsames hinteres 16 und vorderes Steuergerät 18 bilden. Die einzelnen Prozessoreinheiten 8a,b; 10a,b nehmen die Steuerung der Aktuatoren 12a bis 12d und weiterer radindividueller Funktionen, wie lokale Schlupfregelungsfunktionen, an den Rädern, denen sie jeweils zugeordnet sind, wahr.

Die Prozessoren 8a, b des Hinterachskreises 2 übernehmen zusätzliche sogenannte "höhere" Funktionen 14a,b der Gesamtfahrzeug-Steuerung/Regelung, wie z. B. (ABS)-Referenzgeschwindigkeitsbildung, Fahrdynamikregelung usw.. Diese die Gesamtfahrzeugsteuerung/Regelung betreffenden "höheren" Funktionen 14a,b stehen zwecks gegenseitiger Kontrolle miteinander in Wirkverbindung 20.
Darüber hinaus verbindet ein CAN-BUS 22 die radindividuellen Steuerungs-/Regelungseinheiten 8a, b; 10a, b miteinander.
Die Bremsbetätigungseinrichtung 6 gibt ihre Betätigungsfunktion über Signalleitungen 7 direkt an alle Prozessoren 8a,b; 10a, b weiter.

### Bezugszeichenliste

- 2: Vorderradbremskreis
- 4: Hinterradbremskreis
- 6: Bremsbetätigungseinrichtung
- 7: Signalleitungen
- 8a, b: Prozessoren Hinterradbremssteuerung/Regelung
- 10a, b: Prozessoren Vorderradbremssteuerung/Regelung
- 12a-d: Bremsaktuatoren
- 14a, b: zusätzliche, die Gesamtfahrzeugsteuerung/Regelung betreffende Funktionen
- 16: hinteres Steuergerät
- 18: vorderes Steuergerät
- 20: Wirkverbindung
zwischen den "höheren" Funktionen der Hinterradprozessoren
- 22: CAN-BUS

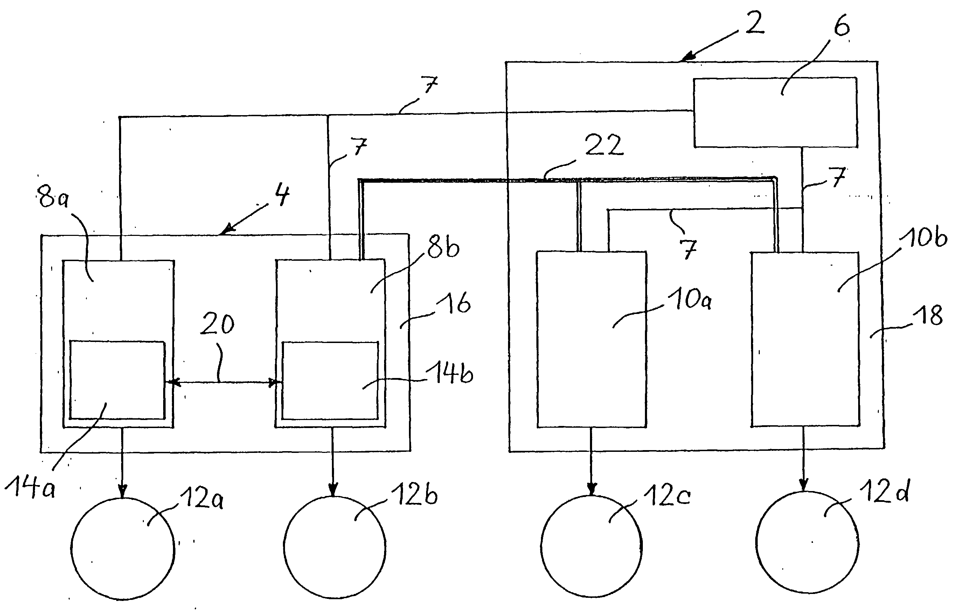

## Patentansprüche

1. Elektrisch/elektronisch regelbares Bremssystem, insbesondere vom Brake-by-wire-Typ,
mit einer Bremsbetätigungseinrichtung (6),
mit mindestens zwei Bremskreisen (2,4),
und mit jeweils zwei Prozessoren (8a,b),(10a,b) je Bremskreis (2,4)
für die Ansteuerung von Aktuatoren (12a bis 12d) und für die Steuerung/Regelung weiterer Funktionen, wie z. B: Schlupfregelfunktionen,
wobei die Prozessoren (8a,b) bzw. (10a,b) der Hinter- bzw. Vorderradbremssteuerung/Regelung jeweils in einem hinteren (16) und einem vorderen Steuergerät (18) zusammengefaßt sind,
**dadurch gekennzeichnet,**
**daß** die Bremsbetätigungseinrichtung (6) ihre Betätigungsfunktion über Signalleitungen (7) direkt an alle Prozessoren (8a,b; 10a,b) weitergibt, und
**daß** die Prozessoren (8a,b) der Radbremsen (12a, b) der Hinterachse bzw. des Hinterachskreises (2) zusätzliche Funktionen (14a,b) der Gesamtfahrzeugregelung wie (ABS)-Referenzgeschwindigkeitsbildung, Fahrdynamikregelung usw., übernehmen.

2. Bremssystem nach Anspruch 1,
**dadurch gekennzeichnet,**
**daß** die Prozessoren (8a,b) an der Hinterachse - zwecks gegenseitiger Kontrolle und Abschaltung im Fehlerfall - miteinander in Wirkverbindung (20) stehen.

3. Bremssystem nach Anspruch 1 oder 2,
**dadurch gekennzeichnet,**
**daß** die Prozessoren (10a,b) an der Vorderachse und das aus den beiden Prozessoreinheiten (8a,b) gebildete Steuergerät (16) an der Hinterachse über CAN-BUS (22) miteinander in Verbindung stehen.

## Claims

1. Electrically/electronically regulatable braking system, more especially of the brake-by-wire type, having a brake actuating arrangement (6), at least two braking circuits (2, 4) and two processors (8a,b), (10a,b) per braking circuit (2, 4) for triggering actuators (12a to 12d) and for controlling/regulating additional functions, such as e.g. slip regulating functions, the processors (8a,b) or respectively (10a,b) of the rear or front wheel brake controlling/regulating system respectively being combined in a rear control mechanism (16) and a front control mechanism (18), **characterised in that** the brake actuating arrangement (6) transmits its actuating function via signal lines (7) directly to all of the processors (8a,b; 10a,b), and **in that** the processors (8a,b) of the wheel brakes (12a,b) of the rear axle or respectively of the rear axle circuit (2) assume additional functions (14a,b) of the total vehicle regulating system, such as (ABS) reference speed formation, regulation of dynamics of vehicle movement, etc.

2. Braking system according to claim 1, **characterised in that** the processors (8a,b) at the rear axle are in operative connection (20) with each other - for the purpose of mutual monitoring and switching-off in the event of a fault.

3. Braking system according to claim 1 or 2, **characterised in that** the processors (10a,b) at the front axle and the control mechanism (16) at the rear axle, which mechanism is formed from the two processor units (8a,b), communicate with one another via CAN bus (22).

## Revendications

1. Système de freinage réglable par voie électrique/électronique, notamment du type "brake-by-wire", comportant
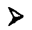 un dispositif (6) d'actionnement des freins,
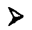 au moins deux circuits de freinage (2, 4), et
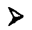 respectivement deux processeurs (8a, 8b), (10a, 10b) pour chaque circuit de frein (2, 4),
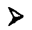 pour la commande d'actionneurs (12a à 12b) et pour la commande/ régulation d'autres fonctions, comme par exemple des fonctions de régulation de glissement,
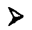 dans lequel les processeurs (8a, b) ou (10a, b) de l'unité de commande/ régulation des freins de roues arrière ou des roues avant sont réunis respectivement dans un appareil de commande arrière (16) et un appareil de commande avant (18),
**caractérisé en ce que** le dispositif (6) d'actionnement des freins transfère sa fonction d'actionnement par l'intermédiaire de lignes (7) de transmission de signaux directement à tous les processeurs (8a, b ; 10a, b), et que les processeurs (8a, b) des freins de roues (12a, b) de l'essieu arrière ou du circuit (2) de l'essieu arrière assument des fonctions supplémentaires (14a, b) de l'ensemble de la régulation du véhicule comme par exemple la formation de la vitesse de référence (ABS), la régulation de la dynamique de conduite, etc.

2. Système de frein selon la revendication 1, **caractérisé en ce que** les processeurs (8a, b) au niveau de l'essieu arrière coopèrent selon une liaison active (20) pour un contrôle réciproque et un débranchement réciproque dans le cas d'un défaut.

3. Système de frein selon la revendication 1 ou 2, **caractérisé en ce que** les processeurs (10a, b) au niveau de l'essieu avant et l'appareil de commande (16) au niveau de l'essieu arrière, qui est formé par les deux unités à processeurs (8a, b), sont reliés entre eux par l'intermédiaire d'un bus CAN (22).
